# EUROPÄISCHE PATENTSCHRIFT

(11) **EP 3 172 103 B1**
(45) Veröffentlichungstag und Bekanntmachung des Hinweises auf die Patenterteilung: **28.09.2022**
(21) Anmeldenummer: 15730770.3
(22) Anmeldetag: 19.06.2015
(51) Int. Cl.: B60W 40/114, B60W 10/20, B60W 10/22, B60T 8/1755, B60W 40/101, B60W 40/103, B60W 50/00

(54) **VERFAHREN UND VORRICHTUNG ZUR BESTIMMUNG EINES RESULTIERENDEN GIERMOMENTS SOWIE VERFAHREN ZUR FAHRDYNAMIKREGELUNG**
METHOD AND DEVICE FOR DETERMINING A RESULTANT YAW MOMENT, AND METHOD FOR DRIVING DYNAMICS REGULATION
PROCÉDÉ ET DISPOSITIF DE DÉTERMINATION D'UN COUPLE D'EMBARDÉE RÉSULTANT ET PROCÉDÉ DE RÉGULATION DE LA DYNAMIQUE DE CONDUITE

(30) Priorität: 22.07.2014 DE 102014214272
(43) Veröffentlichungstag der Anmeldung: 31.05.2017
(73) Patentinhaber: Volkswagen Aktiengesellschaft, 38440 Wolfsburg (DE)
(72) Erfinder: LAUMANNS, Nando, 38442 Wolfsburg (DE)
(86) Internationale Anmeldenummer: PCT/EP2015/063844
(87) Internationale Veröffentlichungsnummer: WO 2016/012167

(56) Entgegenhaltungen:
- WO-A1-00/09376
- DE-A1- 10 226 683
- DE-A1-102004 007 549
- DE-A1-102004 035 004
- DE-A1-102010 001 068

## Beschreibung

Die Erfindung betrifft ein Verfahren und eine Vorrichtung zur Bestimmung eines resultierenden Giermoments zur Fahrdynamikregelung.

In Kraftfahrzeugen existieren in der Regel eine Vielzahl von Fahrdynamikregelsystemen, die jeweils unabhängig voneinander das Fahrverhalten des Fahrzeugs beeinflussen können. Diese Unabhängigkeit der Beeinflussung erzeugt jedoch in nachteiliger Weise einen hohen Abstimmungs- und Erprobungsaufwand bei der Verwendung dieser Vielzahl von Fahrdynamikregelsystemen.

Die DE 102 39 254 A1 offenbart ein Verfahren zur Regelung der Fahrstabilität mit einem Fahrzeugreferenzmodell, in welchem aus den Bewegungsgleichungen des Modells, die das Kräftegleichgewicht in Querrichtung und das Momentengleichgewicht um die Schwerpunktachse wiedergeben, mindestens ein Referenzwert für die Giergeschwindigkeit generiert werden kann. Weiter offenbart die Druckschrift, dass die Referenzgröße in einem sogenannten Einspurmodell ermittelt werden kann.

Die DE 10 2011 077 153 A1 offenbart ein Verfahren zum Modifizieren einer Fahrstabilitätsregelung eines Fahrzeugs, bei dem die zumindest aus dem Lenkwinkel und der Fahrgeschwindigkeit bestehenden Eingangsgrößen aufgrund eines Fahrzeugmodells unter Berücksichtigung eines modellbasiert ermittelten Reibwerts in einen Sollwert der Gierwinkelgeschwindigkeit umgerechnet werden und dieser mit einem gemessenen Istwert der Gierwinkelgeschwindigkeit verglichen wird. Nach Maßgabe des Vergleichsergebnisses wird in einem Fahrstabilitätsregler ein zusätzliches Giermoment berechnet, anhand dessen ein Stabilisierungs-Eingriff mit einem fahrerunabhängigen Aufbau von Bremskräften an einem oder mehreren Rädern angefordert wird, um die Ist-Gierwinkelgeschwindigkeit zur Soll-Gierwinkelgeschwindigkeit hinzuführen, solange die Fahrgeschwindigkeit eine Regelaustrittsgeschwindigkeit des Fahrstabilitätsreglers überschreitet. Weiter wird bei einer Kurvenfahrt des Fahrzeugs in einem Geschwindigkeitsbereich unterhalb der Regelaustrittsgeschwindigkeit des Fahrstabilitätsreglers der Berechnung des Sollwerts der Gierwinkelgeschwindigkeit eine konstante Fahrgeschwindigkeit und ein konstanter Reibwert zugrunde gelegt, wobei ein Stabilisierungs-Eingriff nur in einer Übersteuersituation erfolgt.

Bei dem in dieser Druckschrift beschriebenen Verfahren wird kein Einfluss weiterer Einrichtungen zur Fahrdynamikregelung auf das Giermoment beschrieben. Weiter ist beschrieben, dass das Regelgiermoment, welches zur Festlegung von Steuergrößen dient, in Abhängigkeit einer Differenz zwischen einer Soll-Gierwinkelgeschwindigkeit und einer Ist-Gierwinkelgeschwindigkeit bestimmt wird.

Aus der gattungsgemäßen WO 00/09376 A ist ein Verfahren zur Bestimmung eines resultierenden Giermoments bekannt. Hierfür wird eine fahrdynamische Sollgröße bestimmt und abhängig von dieser Größe ein Referenz-Giermoment. Das resultierende Giermoment ist abhängig von dem Referenz-Giermoment und einem vorhandenen Zusatzgiermoment bestimmbar, welches sich aus einer Gierrate und einem Schräglaufwinkel ergibt.

Die DE 102 26 683 A1 offenbart ein Verfahren und eine Vorrichtung zur Koordinierung der Teilsysteme eines fahrdynamischen Verbundsystems.

Es stellt sich das technische Problem, ein Verfahren und eine Vorrichtung zur Bestimmung eines resultierenden Giermoments zur Fahrdynamikregelung sowie ein Verfahren zur Fahrdynamikregelung zu schaffen, welche einen Aufwand zur Abstimmung von mehreren Fahrdynamikregelsystemen in einem Fahrzeug sowie einen Aufwand zur Erprobung dieser Fahrdynamikregelsysteme, insbesondere für verschiedene fahrdynamische Zustände, reduzieren. Weiter stellt sich das technische Problem, ein Fahrzeug zu schaffen, in welchem ein Abstimmungs- und Erprobungsaufwand reduziert ist.

Die Lösung des technischen Problems ergibt sich durch die Gegenstände mit den Merkmalen der Ansprüche 1 und 10.

Vorgeschlagen wird ein Verfahren zur Bestimmung eines resultierenden Giermoments zur Fahrdynamikregelung eines Fahrzeugs. Das resultierende Giermoment kann hierbei von einer ersten Einrichtung zur Fahrdynamikregelung bestimmt werden. Eine Einrichtung zur Fahrdynamikregelung kann hierbei auch als Fahrerassistenzsystem bezeichnet werden oder Teil eines solchen Systems sein. Durch eine solche Einrichtung zur Fahrdynamikregelung kann eine Längsdynamik, eine Querdynamik und/oder eine Vertikaldynamik des Fahrzeugs geregelt werden. Im Sinne dieser Erfindung umfasst der Begriff Regelung auch den Begriff Steuerung.

Die erste Einrichtung zur Fahrdynamikregelung ist insbesondere eine Einrichtung, die in Abhängigkeit mindestens einer fahrdynamischen Sollgröße, die nachfolgend noch näher erläutert wird, mindestens eine Stellgröße, insbesondere mindestens einen Zusatzlenkwinkel, bestimmt und gegebenenfalls an einer entsprechenden Stelleinrichtung, insbesondere einer Lenkeinrichtung, einstellt.

Weiter wird mindestens eine fahrdynamische Sollgröße bestimmt. Die fahrdynamische Sollgröße kann hierbei insbesondere ein Soll-Schwimmwinkel sein. Alternativ oder kumulativ kann eine fahrdynamische Sollgröße eine Soll-Gierrate sein. Alternativ oder kumulativ, insbesondere alternativ zu dem Soll-Schwimmwinkel, kann eine fahrdynamische Sollgröße eine Soll-Querbeschleunigung des Fahrzeugs sein. Die fahrdynamische Sollgröße kann hierbei durch eine Bestimmungseinrichtung, der auch als Sollwert-Generator bezeichnet werden kann, bestimmt werden.

Ist das zu regelnde Fahrzeug ein Fahrzeug mit einer Überlagerungslenkung, so ist die fahrdynamische Sollgröße vorzugsweise eine Soll-Gierrate. Ist das zu regelnde Fahrzeug ein Fahrzeug mit einer Hinterachs-Lenkeinrichtung, so ist die fahrdynamische Sollgröße vorzugsweise eine Soll-Querbewegung. Weist das zu regelnde Fahrzeug eine Hinterachs-Lenkeinrichtung und mindestens ein weiteres Fahrdynamikregelsystem auf, so sind die fahrdynamischen Sollgrößen vorzugsweise eine Soll-Gierrate und eine Soll-Querbewegung. Das weitere Fahrdynamikregelsystem kann hierbei ein beliebiges System sein, welches die Erzeugung eines Giermoments ermöglicht, beispielsweise ein Überlagerungslenkungssystem, ein Torque-Vectoring-System oder ein Wankausgleichssystem.

In Abhängigkeit der mindestens einen fahrdynamischen Sollgröße wird mindestens ein Referenz-Giermoment bestimmt. Das Referenz-Giermoment kann hierbei ein Giermoment bezeichnen, welches zum Einstellen der mindestens einen fahrdynamischen Sollgröße notwendig ist bzw. bereitgestellt werden muss. Dies kann bedeuten, dass die erste Einrichtung zur Fahrdynamikregelung mindestens eine Stellgröße derart in Abhängigkeit der mindestens einen fahrdynamischen Sollgröße einstellt, dass sich das Referenz-Giermoment am Fahrzeug einstellt.

Das Referenz-Giermoment kann hierbei z.B. in Abhängigkeit von einer Gierbeschleunigung und einer Rotationsträgheit bestimmt werden. Alternativ kann das Referenz-Giermoment in Abhängigkeit von Achsseitenkräften, die jeweils an einer Vorderachse und einer Hinterachse des Fahrzeugs wirken, und einem Abstand eines Schwerpunkts von der jeweiligen Vorder- und Hinterachse bestimmt werden.

Die Stellgröße der ersten Einrichtung zur Fahrdynamikregelung kann insbesondere von dem Referenz-Giermoment verschieden sein. Dies bedeutet, dass die erste Einrichtung nicht unmittelbar das Giermoment einstellt, sondern dass sich das Giermoment indirekt durch Einstellung der mindestens einen Stellgröße durch die erste Einrichtung zur Fahrdynamikregelung ergibt.

Erfindungsgemäß wird mindestens ein verfügbares Zusatzgiermoment bestimmt. Dies wird nachfolgend näher erläutert. Kumulativ kann mindestens ein vorhandenes Zusatzgiermoment bestimmt werden.

Ein vorhandenes Zusatzgiermoment kann ein Giermoment bezeichnen, welches unabhängig von der mindestens einen fahrdynamischen Sollgröße und/oder unabhängig von der mindestens einen Stellgröße der ersten Einrichtung zur Fahrdynamikregelung erzeugt wird.

Ein verfügbares Zusatzgiermoment kann ein Giermoment bezeichnen, welches unabhängig von der mindestens einen fahrdynamischen Sollgröße und/oder unabhängig von der mindestens einen Stellgröße der ersten Einrichtung zur Fahrdynamikregelung erzeugt werden kann. Somit bezeichnet ein vorhandenes Zusatzgiermoment ein Giermoment, welches zu einem aktuellen Zeitpunkt auf das Fahrzeug wirkt. Ein verfügbares Zusatzgiermoment bezeichnet ein Giermoment, welches zu einem aktuellen Zeitpunkt nicht auf das Fahrzeug wirkt, jedoch, beispielsweise durch eine Einrichtung zur Erzeugung eines Zusatzgiermoments, erzeugt werden kann.

Insbesondere kann das Zusatzgiermoment nicht durch die erste Einrichtung zur Fahrdynamikregelung erzeugt werden oder sich aus der Einstellung der Stellgröße der ersten Einrichtung zur Fahrdynamikregelung ergeben. Dies kann bedeuten, dass sich bei einer Veränderung der fahrdynamischen Sollgröße und/oder der mindestens einen Stellgröße der ersten Einrichtung zur Fahrdynamikregelung das Zusatzgiermoment nicht ändert.

Somit sind das Referenz-Giermoment und das Zusatzgiermoment voneinander unabhängig einstellbare oder bereitstellbare Giermomente.

Weiter wird das resultierende Giermoment in Abhängigkeit des Referenz-Giermoments und des mindestens einen verfügbaren Zusatzgiermoments bestimmt. Erfindungsgemäß wird das resultierende Giermoment in Abhängigkeit des Referenz-Giermoments und des mindestens einen verfügbaren Zusatzgiermoments bestimmt. Zusätzlich kann das resultierende Giermoment auch in Abhängigkeit des vorhandenen Zusatzgiermoments bestimmt werden.

Die vorhergehend erläuterte mindestens eine Stellgröße, die von der der ersten Einrichtung zur Fahrdynamikregelung erzeugt wird, kann dann in Abhängigkeit des resultierenden Giermoments bestimmt werden.

Vorzugsweise wird das resultierenden Giermoment derart bestimmt, dass eine Summe des resultierenden Giermoments, aller vorhandenen Zusatzgiermomente und aller verfügbaren und aktivierten Zusatzgiermomente gleich dem Referenzgiermoment ist. Ein aktiviertes, verfügbares Zusatzgiermoment entspricht hierbei einem Zusatzgiermoment, welches zum Zeitpunkt der Bestimmung verfügbar, jedoch nicht vorhanden ist, und nach dem Zeitpunkt der Bestimmung bereitgestellt wird und somit vorhanden ist. So wird das resultierende Giermoment als Differenz zwischen dem Referenz-Giermoment und dem mindestens einen verfügbaren und/oder vorhandenen Zusatzgiermoment bestimmt.

Wird das resultierende Giermoment in Abhängigkeit mindestens eines verfügbaren Zusatzgiermoments bestimmt, so kann das resultierenden Giermoment in Abhängigkeit des maximal verfügbaren Zusatzgiermoments oder nur in Abhängigkeit eines Teils des maximal verfügbaren Zusatzgiermoments bestimmt werden.

Hierdurch ergibt sich in vorteilhafter Weise, dass bei der Bestimmung des Giermoments bei der Fahrdynamikregelung alle Giermomente, die zu einem aktuellen Zeitpunkt im Fahrzeug erzeugt werden und/oder erzeugt werden können, berücksichtigt werden.

Insbesondere können im Fahrzeug mehrere Fahrdynamikregelsysteme vorhanden sein, die jeweils, insbesondere unabhängig voneinander, ein Giermoment erzeugen können bzw. einen Beitrag zu einem gesamten Giermoment bereitstellen. Das vorgeschlagene Verfahren ermöglicht in vorteilhafter Weise eine Koordination der Regeleingriffe mehrerer Fahrdynamikregelsysteme in dem Fahrzeug und reduziert somit in vorteilhafter Weise den Abstimmungs- und Erprobungsaufwand.

Weiter ist das Zusatzgiermoment von einer Einrichtung zur Erzeugung eines Zusatzgiermoments bereitstellbar. Die Einrichtung zur Erzeugung eines Zusatzgiermoments kann hierbei ebenfalls eine Einrichtung zur Fahrdynamikregelung bzw. ein Fahrdynamikregelsystem sein oder einen Teil davon ausbilden. Allerdings wird das von der Einrichtung zur Erzeugung eines Zusatzgiermoments erzeugte oder erzeugbare Zusatzgiermoment, wie vorhergehend bereits erläutert, unabhängig von dem Referenz-Giermoment erzeugt. Insbesondere kann die Einrichtung zur Erzeugung eines Zusatzgiermoments verschieden von der ersten Einrichtung zur Fahrdynamikregelung sein. Auch kann eine Stellgröße, welche von der Einrichtung zur Erzeugung eines Zusatzgiermoments bestimmt wird, verschieden von der mindestens einen Stellgröße sein, die von der ersten Einrichtung zur Fahrdynamikregelung erzeugt wird. Dies kann bedeuten, dass die erste Einrichtung zur Fahrdynamikregelung und die Einrichtung zur Erzeugung eines Zusatzgiermoments voneinander verschiedene Stelleinrichtungen ansteuern.

Bereitstellbar bedeutet in diesem Zusammenhang, dass das Zusatzgiermoment von der Einrichtung zur Erzeugung eines Zusatzgiermoments zu einem aktuellen Zeitpunkt, insbesondere zum Zeitpunkt der Bestimmung, nicht erzeugt wird, jedoch, insbesondere in einer bestimmten Höhe, erzeugt werden kann, beispielsweise durch Aktivierung der Einrichtung zur Erzeugung eines Zusatzgiermoments.

In einer weiteren Ausführungsform wird das vorhandene Zusatzgiermoment von einer Einrichtung zur Erzeugung eines Zusatzgiermoments bereitgestellt. Dies bedeutet, dass das Zusatzgiermoment zu einem aktuellen Zeitpunkt, insbesondere zum Zeitpunkt der Bestimmung, erzeugt wird und auf das Fahrzeug wirkt.

Hierdurch ergibt sich in vorteilhafter Weise die vorhergehend erläuterte Koordination der Regeleingriffe, wenn Giermomente bzw. Beiträge zum Giermoment von verschiedenen Einrichtungen im Fahrzeug erzeugt werden.

In einer bevorzugten Ausführungsform ist die Einrichtung zur Erzeugung eines Zusatzgiermoments eine Einrichtung zur Wankregelung. Alternativ ist die Einrichtung eine Einrichtung zur Verteilung eines Antriebsmoments. Die Einrichtung zur Verteilung eines Antriebsmoments kann auch als Torque-Vectoring-Regeleinrichtung bezeichnet werden.

Eine Einrichtung zur Wankregelung kann ein Zusatzgiermoment durch Anpassung der Radlasten erzeugen. Beispiele für solche Systeme sind aktive Stabilisatoren oder Systeme zur Federfußpunktverstellung (z. B. Active Body Control). Die Einrichtung zur Verteilung eines Antriebsmoments kann ein Antriebsmoment zwischen zwei oder vier Räder des Fahrzeugs verteilen, damit ein vorbestimmtes Giermoment bereitgestellt werden kann.

Hierdurch ergibt sich in vorteilhafter Weise, dass die genannten Fahrdynamikregelsysteme, die unmittelbar ein Zusatzgiermoment erzeugen, bei der Bestimmung des resultierenden Giermoments berücksichtigt werden.

In einer weiter bevorzugten Ausführungsform wird das Referenz-Giermoment in Abhängigkeit der mindestens einen fahrdynamischen Sollgröße unter Verwendung eines invertierten Einspurmodells bestimmt. Das Einspurmodell kann hierbei zur Modellierung einer Querdynamik von Fahrzeugen im stationären und instationären Zustand dienen. Das invertierte Einspurmodell kann hierbei ebenfalls der Bestimmung weiterer, von dem Referenz

Stellgröße zur Einstellung eines gewünschten fahrdynamischen Zustands. Insbesondere kann das invertierte Einspurmodell mindestens einen Zusatzlenkwinkel in Abhängigkeit einer Soll-Gierrate und/oder eines Soll-Schwimmwinkels bestimmen.

Das invertierte Einspurmodell kann hierbei ein parametrisiertes Modell bezeichnen. Hierbei können die Parameter des Einspurmodells geschwindigkeitsabhängige Parameter sein. Allerdings kann das invertierte Einspurmodell auch in Form einer Funktion zur analytischen Bestimmung des Referenz-Giermoments und der vorhergehend erläuterten Stellgröße der ersten Einrichtung zur Fahrdynamikregelung gegeben sein.

Z.B. kann die erste Einrichtung zur Fahrdynamikregelung das Referenz-Giermoment unter Verwendung des invertierten Einspurmodells bestimmen.

Somit ergibt sich in vorteilhafter Weise eine zuverlässige Bestimmung des Referenz-Giermoments.

In einer weiteren Ausführungsform wird die mindestens eine fahrdynamische Sollgröße unter Verwendung eines nicht-invertierten Einspurmodells bestimmt. Hierbei kann/können im erfindungsgemäßen Verfahren eine oder mehrere Größen verwendet werden, die als Eingangsgröße für das nicht-invertierte Einspurmodell dient/dienen. Eine solche Größe kann beispielsweise eine Fahrgeschwindigkeit oder ein Lenkwinkel sein, der z.B. von einem Fahrzeugführer an einem Lenkrad des Fahrzeugs eingestellt wird. In Abhängigkeit des Lenkwinkels kann dann die mindestens eine fahrdynamische Sollgröße unter Verwendung des nicht-invertierten Einspurmodells bestimmt werden, insbesondere der vorhergehend erläuterte Soll-Schwimmwinkel und/oder die vorhergehend erläuterte Soll-Gierrate.

Hierdurch ergibt sich in vorteilhafter Weise eine sogenannte Modellfolgeregelung. Diese ermöglicht in vorteilhafter Weise die Abstimmung der Regelsysteme anhand der Modelldynamik eines einfachen Fahrdynamikmodells. Grundansatz ist hierbei, dass das Fahrverhalten des geregelten Fahrzeugs an das berechnete Fahrverhalten des Referenzmodells angepasst wird.

In einer weiteren Ausführungsform sind das invertierte und nicht-invertierte Einspurmodell verschieden parametrisiert. So kann z.B. das nicht-invertierte Einspurmodell Modellparameter eines ersten Fahrzeugtyps enthalten, wohingegen das invertierte Einspurmodell Fahrzeugparameter eines weiteren Fahrzeugtyps enthält. Das zu regelnde Fahrzeug entspricht vorzugsweise dem weiteren Fahrzeugtyp. Dies ermöglicht in vorteilhafter Weise, dass Verfahren zur Fahrdynamikregelung, die auf andere Fahrzeugtypen angepasst sind, beispielsweise sportlichere Fahrzeugtypen, auf das zu regelnde Fahrzeug übertragen werden können, ohne eine Stabilität zu gefährden.

Weiter vorgeschlagen wird ein Verfahren zur Fahrdynamikregelung eines Fahrzeugs, wobei ein resultierendes Giermoment zur Steuerung der ersten Einrichtung zur Fahrdynamikregelung gemäß einem Verfahren entsprechend einer der vorhergehend erläuterten Ausführungsformen bestimmt wird. Weiter wird in Abhängigkeit des resultierenden Giermoments mindestens eine Stellgröße für mindestens eine Stelleinrichtung des Fahrzeugs bestimmt. Die Stelleinrichtung kann insbesondere eine Vorderachs-Lenkeinrichtung und/oder eine Hinterachs-Lenkeinrichtung sein.

Die Bestimmung des Referenz-Giermoments kann hierbei in einem Teilschritt im Verfahren zur Fahrdynamikregelung erfolgen. Insbesondere wird in dem Verfahren zur Fahrdynamikregelung in Abhängigkeit der mindestens einen fahrdynamischen Sollgröße die mindestens eine Stellgröße bestimmt. Als Teilschritt kann hierbei in Abhängigkeit der mindestens einen fahrdynamischen Sollgröße das Referenz-Giermoment bestimmt werden, wobei in Abhängigkeit des Referenz-Giermoments wiederum das resultierende Giermoment bestimmt wird. Dann wiederum kann in Abhängigkeit des resultierenden Giermoments die mindestens eine Stellgröße bestimmt werden.

Das Verfahren zur Fahrdynamikregelung kann hierbei vorzugsweise ein Verfahren zur Vorsteuerung und ein Verfahren zur Regelung umfassen. Hierbei kann das resultierende Giermoment als Teilschritt im Verfahren zur Vorsteuerung bestimmt werden. Durch das Verfahren zur Vorsteuerung kann insbesondere ein Fahrverhalten im linearen Bereich eingestellt werden. Als linearer Bereich kann ein Bereich von fahrdynamischen Zuständen beschrieben werden, in dem auf die Räder wirkende Seitenkräfte in linearer Weise oder annähernd linearer Weise von einem Schräglaufwinkel abhängen. Ein solcher linearer Zusammenhang kann beispielsweise bis zu einem vorbestimmten Prozentsatz der maximal möglichen oder maximal aufnehmbaren Seitenkräfte, beispielsweise bis zu 40% der maximal aufnehmbaren Seitenkräfte, gegeben sein.

Das Verfahren zur Regelung ermöglicht in vorteilhafter Weise, dass unerwünschte Abweichungen von fahrdynamischen Sollgrößen, die beim oder nach der Durchführung des Verfahrens zur Vorsteuerung auftreten, kompensiert werden können. Das Verfahren zur Regelung kann somit ein Verhalten in Grenzbereichen bestimmen. Insbesondere kann die Gierratenregelung auf berechnete Übersteuer- oder Untersteuerwerte reagieren. Weiter kann das Verfahren zur Regelung auf Nichtlinearitäten in einem Fahrzeugmodell, beispielsweise dem nachfolgend noch erläuterten Einspurmodell, auf eine Reglerverstärkung und Totbänder abgestimmt werden. Ein Totband bezeichnet einen Bereich einer Regelgröße, in dem durch die Regelgröße kein Regeleingriff verursacht wird. Somit kann das Verfahren zur Regelung insbesondere Modellungenauigkeiten eines Fahrzeugmodells, welches im Verfahren zur Vorsteuerung genutzt wird, kompensieren. Die Reglerstruktur kann hierbei systemabhängig gewählt werden, z.B. als P-Regler oder als PD-Regler.

Insgesamt ergibt sich in vorteilhafter Weise eine Fahrdynamikregelung, in welchem alle vorhandenen und verfügbaren Zusatzgiermomente berücksichtigt werden können.

In einer weiteren Ausführungsform wird in Abhängigkeit des mindestens einen verfügbaren Zusatzgiermoments eine Steuergröße für eine Einrichtung zur Erzeugung eines Zusatzgiermoments bestimmt. In Abhängigkeit der Steuergröße kann die Einrichtung zur Erzeugung eines Zusatzgiermoments dann z.B. eine Stellgröße für eine entsprechende Stelleinrichtung erzeugen.

Beispielsweise kann sich eine Einrichtung zur Erzeugung eines Zusatzgiermoments in einem nicht-aktivierten Zustand befinden. Weiter kann vorbekannt sein, dass diese Einrichtung zur Erzeugung eines Zusatzgiermoments ein Zusatzgiermoment, insbesondere ein maximales Zusatzgiermoment, in einer bestimmten Höhe bereitstellen kann. Bei der Bestimmung des resultierenden Giermoments kann dann dieses verfügbare Giermoment oder ein Teil davon, welches jedoch noch nicht bereitgestellt wird, berücksichtigt werden. Dann wird die entsprechende Einrichtung zur Erzeugung eines Zusatzgiermoments aktiviert und durch die Steuergröße derart angesteuert, dass das gewünschte, insbesondere maximale, Zusatzgiermoment bereitgestellt wird. Die Steuergröße kann hierbei eine Eingangsgröße, insbesondere ein Soll-Zusatzgiermoment, der Einrichtung zur Erzeugung eines Zusatzgiermoments sein.

Existieren mehrere Einrichtungen zur Erzeugung eines Zusatzgiermoments, so kann auch eine gewünschte, insbesondere vorbestimmte, beispielsweise vorbestimmte prozentuale, Aufteilung des Referenz-Giermoments oder eines Anteils, insbesondere eines vorbestimmten Anteils, des Referenz-Giermoments auf die von diesen Einrichtung bereitstellbare Zusatzgiermoment erfolgen.

Beispielsweise kann das (noch) verfügbare Zusatzgiermoment jeder Einrichtung zur Erzeugung eines Zusatzgiermoments bestimmt werden.

Die Verteilung des Referenz-Giermoments auf ein oder mehrere Zusatzgiermomente sowie das ein gegebenenfalls bereits vorhandenes Zusatzgiermoments und auf das resultierende Giermoment kann hierbei in Abhängigkeit vorbestimmter Fahrkomfortparameter oder hinsichtlich einer minimierten Bordnetzbelastung erfolgen.

Sind beispielsweise zu hohe Änderungen in einer Stellgröße unerwünscht, so kann das resultierende Giermoment oder ein Zusatzgiermoment, welches durch eine bestimmte Einrichtung zur Erzeugung eines Zusatzgiermoments erzeugbar ist, derart beschränkt werden, dass keine derart unerwünschte Änderung der Stellgröße auftritt. Ist jedoch in diesem Fall für die Einstellung eines gewünschten fahrdynamischen Zustands ein weiterer Giermomentanteil notwendig, so kann dieser Anteil dann dem resultierenden Giermoment oder einem weiteren Zusatzgiermoment zugeschlagen werden.

Insgesamt ergibt sich in vorteilhafter Weise, dass das insgesamt notwendige Giermoment auf verschiedene Einrichtungen zur Fahrdynamikregelung verteilbar ist.

Weiter vorgeschlagen wird eine Vorrichtung zur Bestimmung eines resultierenden Giermoments zur Fahrdynamikregelung. Die Vorrichtung kann hierbei insbesondere als Auswerteeinrichtung, beispielsweise als Mikrocontroller, oder Teil davon, ausgebildet sein. Die Vorrichtung kann hierbei ein Steuergerät des Fahrzeugs oder ein Teil davon sein.

Mittels der Vorrichtung ist in Abhängigkeit mindestens einer fahrdynamischen Sollgröße mindestens ein Referenz-Giermoment bestimmbar.

Erfindungsgemäß ist mindestens ein verfügbares Zusatzgiermoment bestimmbar, wobei das resultierende Giermoment in Abhängigkeit des mindestens einen verfügbaren Zusatzgiermoments bestimmbar ist. Zusätzlich kann ein Zusatzgiermoment bestimmbar sein, wobei das resultierende Giermoment auch in Abhängigkeit des vorhandenen Zusatzgiermoments bestimmbar sein kann.

Mittels der vorgeschlagenen Vorrichtung ist in vorteilhafter Weise ein Verfahren zur Bestimmung des resultierenden Giermoments gemäß einer der vorhergehend erläuterten Ausführungsformen durchführbar.

In einer weiteren Ausführungsform ist mittels der Vorrichtung in Abhängigkeit des resultierenden Giermoments mindestens eine Stellgröße für mindestens eine Stelleinrichtung des Fahrzeugs bestimmbar. Alternativ oder kumulativ ist in Abhängigkeit des mindestens einen verfügbaren Zusatzgiermoments eine Steuergröße für eine Einrichtung zur Erzeugung eines Zusatzgiermoments bestimmbar.

Somit ist auch eine Vorrichtung zur Fahrdynamikregelung beschrieben mittels der in vorteilhafter Weise ein Verfahren zur Fahrdynamikregelung gemäß einer der vorhergehend erläuterten Ausführungsformen durchführbar ist.

Weiter vorgeschlagen wird ein Fahrzeug, wobei das Fahrzeug eine Vorrichtung gemäß einer der vorhergehend erläuterten Ausführungsformen umfasst.

Die Erfindung wird anhand eines Ausführungsbeispielspiels näher erläutert. Die Figuren zeigen:
- Fig. 1: ein schematisches Blockschaltbild einer Fahrdynamikregelung eines Fahrzeugs und
- Fig. 2: ein detailliertes schematisches Blockschaltbild der in Fig. 1 dargestellten Fahrdynamikregelung.

Nachfolgend bezeichnen gleiche Bezugszeichen Elemente mit gleichen oder ähnlichen technischen Merkmalen.

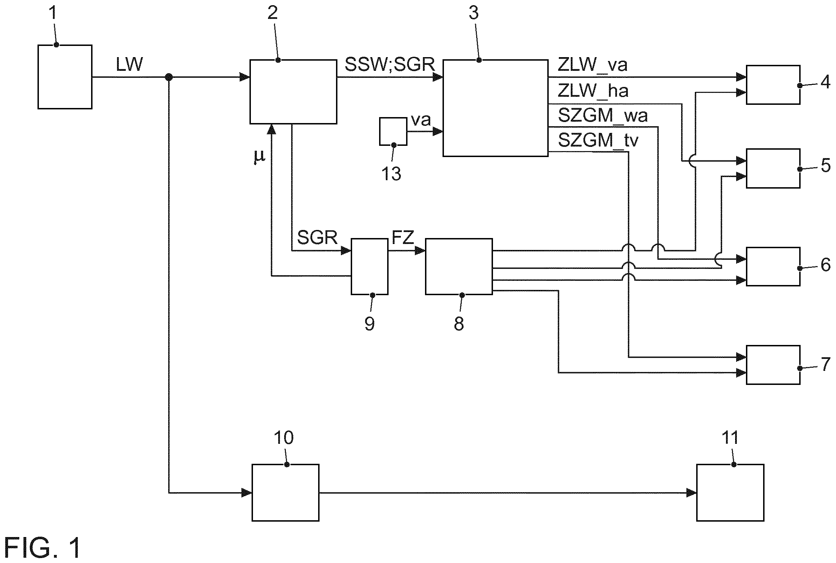

In Fig. 1 ist schematisch ein Blockschaltbild einer Fahrdynamikregelung eines nicht dargestellten Fahrzeugs, insbesondere eines Kraftfahrzeugs, dargestellt. Über eine geeignete Eingabeeinrichtung, beispielsweise ein Lenkrad 1, wird ein Lenkwinkel LW für eine nicht dargestellte Vorderachse des Fahrzeugs, insbesondere durch einen Fahrzeugführer, vorgegeben. Der Lenkwinkel LW bildet hierbei eine Eingangsgröße für eine Sollgrößenbestimmungseinrichtung 2. Die Sollgrößenbestimmungseinrichtung 2 bestimmt in Abhängigkeit des Lenkwinkels LW einen Sollschwimmwinkel SSW und eine Soll-Gierrate SGR. Alternativ oder kumulativ kann durch die Sollgrößenbestimmungseinrichtung 2 als Sollgröße eine Ableitung des Sollschwimmwinkels SSW und/oder der Soll-Gierrate SGR bestimmt werden. Weiter alternativ oder kumulativ kann durch die Sollgrößenbestimmungseinrichtung 2 als Sollgröße auch eine Soll-Querbeschleunigung und/oder deren Ableitung bestimmt werden. Die Bestimmung dieser Sollgrößen SSW, SGR erfolgt beispielsweise unter Verwendung eines nicht-invertierten Fahrzeugmodells, insbesondere eines nicht-invertierten Einspurmodells, des zu regelnden Fahrzeugs.

Der Sollschwimmwinkel SSW und die Soll-Gierrate SGR bilden Eingangsgrößen für eine Stellgrößen-Bestimmungseinrichtung 3. Weiter dargestellt ist, dass eine Fahrzeuglängsgeschwindigkeit va, die beispielsweise durch einen Geschwindigkeitssensor 13 erfasst wird, eine Eingangsgröße für die Stellgrößen-Bestimmungseinrichtung 3 bildet. Die Fahrzeuglängsgeschwindigkeit va kann auch eine Eingangsgröße für die Sollgrößenbestimmungseinrichtung 2 sein.

Die Stellgrößen-Bestimmungseinrichtung 3 bestimmt dann in Abhängigkeit der Eingangsgrößen einen Zusatzlenkwinkel ZLW_va für eine Vorderachse des Fahrzeugs, der an eine Vorderachs-Lenkeinrichtung 4 übertragen wird. Entsprechend bestimmt die Stellgrößen-Bestimmungseinrichtung 3 einen Zusatzlenkwinkel ZLW_ha für eine Hinterachse, der an eine Hinterachs-Lenkeinrichtung 5 übertragen wird. Weitere bestimmt die Stellgrößen-Bestimmungseinrichtung 3 ein Soll-Zusatzgiermoment SZGM_wa für eine Einrichtung 6 zur Wankregelung, welches an diese Einrichtung 6 zur Wankregelung übertragen wird. Weiter bestimmt die Stellgrößen-Bestimmungseinrichtung 3 ein Soll-Zusatzgiermoment SZGM_tv für eine Einrichtung 7 zur Verteilung eines Antriebsmoments, welches an diese Einrichtung 7 zur Verteilung des Antriebsmoments übertragen wird.

Die Stellgrößen-Bestimmungseinrichtung 3 führt hierbei ein Verfahren zur Vorsteuerung als Teil der Fahrdynamikregelung durch. Die Stellgrößen-Bestimmungseinrichtung 3 bestimmt die Stellgrößen in Abhängigkeit eines invertierten Fahrzeugmodells, insbesondere eines invertierten Einspurmodells, des Fahrzeugs.

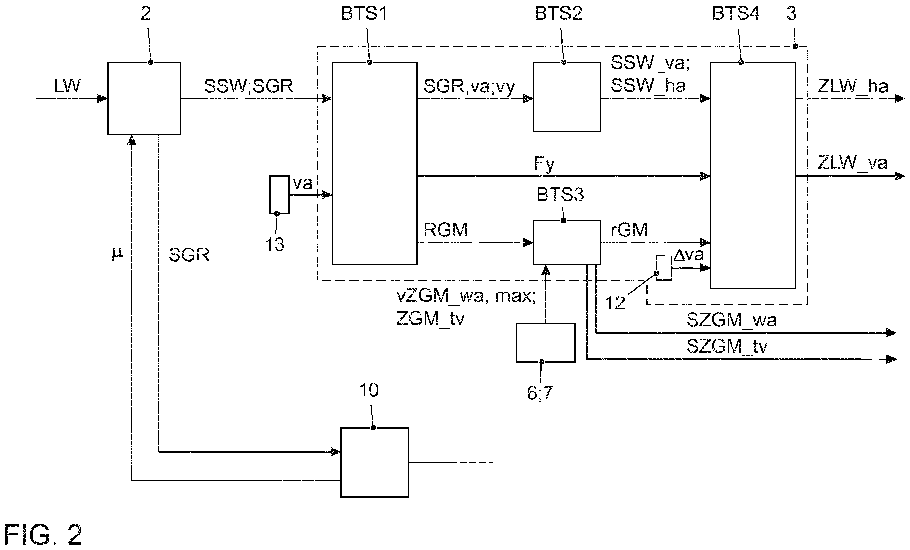

Als Teilschritt bei der Bestimmung der Stellgrößen in Abhängigkeit der Eingangsgrößen wird durch die Stellgrößen-Bestimmungseinrichtung 3 ein Referenz-Giermoment RGM (siehe Fig. 2) bestimmt. In Abhängigkeit des Referenz-Giermoments RGM und in Abhängigkeit von vorhandenen und/oder verfügbaren Zusatzgiermomenten wird dann ein resultierendes Giermoment rGM (siehe Fig. 2) bestimmt.

Die Zusatzlenkwinkel ZLW_va, ZLW_ha werden durch die Stellgrößen-Bestimmungseinrichtung 3 dann derart bestimmt, dass das resultierende Giermoment rGM aufgrund der eingestellten Zusatzlenkwinkel ZLW_va, ZLW_ha am Fahrzeug eingestellt wird. Die Soll-Zusatzgiermomente SZGM_wa, SZGM_tv werden durch die Stellgrößen-Bestimmungseinrichtung 3 derart eingestellt, dass eine Summe aus dem resultierenden Giermoment rGM und den Soll-Zusatzgiermomenten SZGM_wa, SZGM_tv dem Referenz-Giermoment RGM entspricht.

Weiter dargestellt ist eine Gierraten-Regeleinrichtung 8. Die durch die Sollgrößenbestimmungseinrichtung 2 bestimmte Soll-Gierrate SGR oder eine davon abhängige Größe werden an die Gierraten-Regeleinrichtung 8 übertragen. Hierbei ist zusätzlich eine Fahrzustandserkennungseinrichtung 9 dargestellt, die in Abhängigkeit der Soll-Gierrate SGR einen Fahrzustand FZ bestimmt, der dann als Eingangsgröße für die Gierraten-Regeleinrichtung 8 dienen kann. Ein Fahrzustand FZ kann beispielsweise ein Übersteuern oder ein Untersteuern des Fahrzeugs bezeichnen. Weiter kann die Fahrzustandserkennungseinrichtung 9 einen Reibwert µ von Rädern des Fahrzeugs bestimmen, der wiederum an die Sollgrößenbestimmungseinrichtung 2 übertragen werden kann, wobei die Sollgrößenbestimmungseinrichtung 2 die Sollgrößen SSW, SGR dann zusätzlich in Abhängigkeit des Reibwerts µ bestimmen kann.

Es ist dargestellt, dass die Gierraten-Regeleinrichtung 8 ebenfalls Stellgrößen für die Vorderachs-Lenkeinrichtung 4, die Hinterachs-Lenkeinrichtung 5, die Einrichtung 6 zur Wankregelung und die Einrichtung 7 zur Verteilung eines Antriebsmoments erzeugen kann. Weiter dargestellt ist eine Stabilitätsregeleinrichtung 10, die auch als ESC-Einrichtung bezeichnet werden kann. Diese bestimmt Stellgrößen für weitere Stelleinrichtungen 11 des Fahrzeugs, um eine fahrdynamische Instabilität des Fahrzeugs zu verhindern.

In Fig. 2 ist ein detaillierteres Blockschaltbild der in Fig. 1 dargestellten Fahrdynamikregelung dargestellt. Hierbei ist die Stellgrößen-Bestimmungseinrichtung 3 detailliert dargestellt.

Die Sollgrößenbestimmungseinrichtung 2 bestimmt, wie zu Fig. 1 bereits beschrieben, einen Soll-Schwimmwinkel SSW und eine Soll-Gierrate SGR als Eingangsgrößen für die Stellgrößen-Bestimmungseinrichtung 3. Als weitere Eingangsgröße dient eine Längsgeschwindigkeit va des Fahrzeugs, die durch einen Geschwindigkeitssensor 13 erfasst wird.

Selbstverständlich können weitere Eingangsgrößen für die Stellgrößen-Bestimmungseinrichtung 3 bestimmt werden, insbesondere von dem Soll-Schwimmwinkel SSW und der Soll-Gierrate SGR und der Längsgeschwindigkeit va abhängige Eingangsgrößen. So ist es z.B. vorstellbar, dass eine oder mehrere oder alle der folgenden Größen Eingangsgrößen für die Stellgrößen-Bestimmungseinrichtung 3 bilden: Soll-Gierwinkelbeschleunigung, Soll-Gierwinkelgeschwindigkeit (Soll-Gierrate), Soll-Gierwinkel, Soll-Hinterachsschwimmwinkelgeschwindigkeit, Soll-Hinterachsschwimmwinkelbeschleunigung, Soll-Hinterachsschwimmwinkel, Soll-Vorderachsschwimmwinkel, Soll-Vorderachsschwimmwinkelgeschwindigkeit, Soll-Vorderachsschwimmwinkelbeschleunigung , Längsbeschleunigung, Querbeschleunigung, Reibwert.

Somit können die Eingangsgrößen für die Stellgrößen-Bestimmungseinrichtung 3 in rechnerisch bestimmte Eingangsgröße bzw. davon abhängige Größen und erfasste Eingangsgrößen bzw. davon abhängige Größen unterteilt werden.

Unter Verwendung des invertierten Einspurmodells können in einem ersten Bestimmungsteilschritt BTS1 weitere fahrdynamische Größen bestimmt werden. So kann z.B. mindestens eine, mehrere oder alle der folgenden fahrdynamischen Größen bestimmt werden: Querkraft Fy in einem Fahrzeugschwerpunkt, Quergeschwindigkeit im Fahrzeugschwerpunkt vy, Querkraft an einer Vorderachse, Querkraft an einer Hinterachse. Weiter wird im ersten Bestimmungsteilschritt BTS1 ein Referenz-Giermoment RGM bestimmt.

In einem zweiten Bestimmungsteilschritt BTS2 kann dann ein Soll-Schwimmwinkel SSW_va der Vorderachse und ein Soll-Schwimmwinkel SSW_ha der Hinterachse bestimmt werden. Dies kann beispielsweise in Abhängigkeit der Soll-Gierrate SGR, der Längsgeschwindigkeit va und der Quergeschwindigkeit vy erfolgen.

In einem dritten Bestimmungsteilschritt BTS3 kann in Abhängigkeit des Referenz-Giermoments RGM ein resultierendes Giermoment rGM bestimmt werden. Dies erfolgt erfindungsgemäß in Abhängigkeit eines maximal verfügbaren Zusatzgiermoments vZGM_wa, max der Einrichtung 6 zur Wankregelung, welches ein verfügbares Zusatzgiermoment bezeichnet. Weiter erfolgt die Bestimmung des resultierenden Giermoments rGM in Abhängigkeit eines vorhandenen Zusatzgiermoments, nämlich des Zusatzgiermoments ZGM_tv, welches durch die Einrichtung 7 zur Verteilung eines Antriebsmoments bereits erzeugt wird. Insbesondere wird das resultierende Giermoment rGM als Differenz zwischen dem Referenz-Giermoment RGM und der Summe aus dem maximal verfügbaren Zusatzgiermoment vZGM_wa, max und des bereits erzeugten Zusatzgiermoments ZGM_tv bestimmt.

Weiter kann im dritten Bestimmungsteilschritt BTS3 ein Soll-Zusatzgiermoment SZGM_wa als Stellgröße für die in Fig. 1 dargestellte Einrichtung 6 zur Wankregelung sowie ein Soll-Zusatzgiermoment SZGM_tv für die Einrichtung 7 zur Verteilung eines Antriebsmoments bestimmt werden. Hierbei kann z.B. das Soll-Zusatzgiermoment SZGM_wa für die Einrichtung 6 zur Wankregelung als das maximal verfügbare, aber noch nicht bereitgestellten Zusatzgiermoment vZGM_wa, max bestimmt werden. Das Soll-Zusatzgiermoment SZGM_tv der Einrichtung 7 zur Verteilung eines Antriebsmoments kann als das aktuelle Zusatzgiermoment ZGM_tv der Einrichtung 7 zur Verteilung eines Antriebsmoments bestimmt werden und somit unverändert bleiben. Alternativ ist es selbstverständlich möglich, dass das Soll-Zusatzgiermoment SZGM_tv der Einrichtung 7 zur Verteilung eines Antriebsmoments als ein von dem aktuellen Zusatzgiermoment ZGM_tv der Einrichtung 7 zur Verteilung eines Antriebsmoments verschiedenes Giermoment bestimmt wird.

In einem vierten Bestimmungsteilschritt BTS4 werden in Abhängigkeit des resultierenden Giermoments rGM und weiterer fahrdynamischer Sollgrößen, beispielsweise der Querkraft Fy, einer Längsbeschleunigung Δva und der Soll-Schwimmwinkel SSW_va, SSW_ha an Vorderachse und Hinterachse die Zusatzlenkwinkel ZLW_ha, ZLW_va an der Hinter- und Vorderachse derart bestimmt, dass durch die resultierenden Lenkwinkel dann das resultierende Giermoment rGM bereitgestellt wird. Insgesamt wirkt jedoch am Fahrzeug das Referenz-Giermoment RGM, da gleichzeitig die Soll-Zusatzgiermomente SZGM_wa, SZGM_tv bereitgestellt werden. Hierbei ist dargestellt, dass die Längsbeschleunigung Δva durch einen Beschleunigungssensor 12 erfasst wird.

Insbesondere wird somit durch die Stellgrößenbestimmungseinrichtung 3 eine Bestimmung der Soll-Schwimmwinkel SSW_va, SSW_ha an der Vorderachse und Hinterachse in Abhängigkeit einer Quergeschwindigkeit, einer Längsgeschwindigkeit va und einer Soll-Gierrate SGR durchgeführt. Weiter wird eine Berechnung von notwendigen Zusatzlenkwinkeln ZLW_ha, ZLW_va und von notwendigen Zusatzgiermomenten SZGM_wa, SZGM_tv durchgeführt. Hierbei können Zusatzgiermomente SZGM_wa, SZGM tv verschiedener Fahrdynamikregelsysteme zusammengefasst werden. Das Gesamtzusatzgiermoment wird hierbei bei der Berechnung der notwendigen Zusatzlenkwinkel ZLW_ha, ZLW_va berücksichtigt, um ein gewünschtes Fahrverhalten möglichst exakt einzustellen.

### Bezugszeichenliste

- 1: Lenkrad
- 2: Sollgrößenbestimmungseinrichtung
- 3: Stellgrößen-Bestimmungseinrichtung
- 4: Vorderachs-Lenkeinrichtung
- 5: Hinterachs-Lenkeinrichtung
- 6: Einrichtung zur Wankregelung
- 7: Einrichtung zur Verteilung eines Antriebsmoments
- 8: Gierraten-Regeleinrichtung
- 9: Fahrzustandserkennungseinrichtung
- 10: Stabilitätsregeleinrichtung
- 11: weitere Stelleinrichtungen
- 12: Beschleunigungssensor
- 13: Geschwindigkeitssensor
- LW: Lenkwinkel
- µ: Reibwert
- SSW: Soll-Schwimmwinkel
- SGR: Soll-Gierrate
- va: Längsgeschwindigkeit
- BTS1: erster Bestimmungsteilschritt
- BTS2: zweiter Bestimmungsteilschritt
- BTS3: dritter Bestimmungsteilschritt
- BTS4: vierter Bestimmungsteilschritt
- vy: Quergeschwindigkeit
- Fy: Querkraft
- RGM: Referenz-Giermoment
- rGM: resultierendes Giermoment
- SZGM_wa: Soll-Zusatzgiermoment
- SZGM_tv: Soll-Zusatzgiermoment
- vZGM_wa, max: maximal verfügbares Zusatzgiermoment
- ZGM_tv: vorhandenes Zusatzgiermoment
- SSW_va: Soll-Schwimmwinkel an der Vorderachse
- SSW_ha: Soll-Schwimmwinkel an der Hinterachse
- ZLW_ha: Zusatzlenkwinkel an der Hinterachse
- ZLW_va: Zusatzlenkwinkel an der Vorderachse

## Patentansprüche

1. Verfahren zur Bestimmung eines resultierenden Giermoments (rGM) zur Fahrdynamikregelung eines Fahrzeugs, wobei mindestens eine fahrdynamische Sollgröße bestimmt wird, wobei in Abhängigkeit der mindestens einen fahrdynamischen Sollgröße mindestens ein Referenz-Giermoment (RGM) bestimmt wird, wobei mindestens ein verfügbares Zusatzgiermoment bestimmt wird, welches von einer Einrichtung zur Erzeugung eines Zusatzgiermoments erzeugbar ist, wobei das resultierende Giermoment (rGM) in Abhängigkeit des Referenz-Giermoments (RGM) und des mindestens einen verfügbaren Zusatzgiermoments bestimmt wird,
**dadurch gekennzeichnet, dass**
das verfügbare Zusatzgiermoment unabhängig vom Referenz-Giermoment erzeugbar ist, wobei das resultierende Giermoment (rGM) als Differenz zwischen dem Referenz-Giermoment (RGM) und dem mindestens einen verfügbaren Zusatzgiermoment bestimmt wird.

2. Verfahren nach Anspruch 1, **dadurch gekennzeichnet, dass** zusätzlich mindestens ein vorhandenes Zusatzgiermoment bestimmt wird, wobei das resultierende Giermoment (rGM) in Abhängigkeit des vorhandenen Zusatzgiermoment bestimmt wird.

3. Verfahren nach Anspruch 2, **dadurch gekennzeichnet, dass** das vorhandene Zusatzgiermoment von einer Einrichtung zur Erzeugung eines Zusatzgiermoments bereitgestellt wird.

4. Verfahren nach Anspruch 3, **dadurch gekennzeichnet, dass** das die Einrichtung zur Erzeugung eines Zusatzgiermoments eine Einrichtung (6) zur Wankregelung oder eine Einrichtung (7) zur Verteilung eines Antriebsmoments ist.

5. Verfahren nach einem der vorangegangenen Ansprüche, **dadurch gekennzeichnet, dass** das Referenz-Giermoment (RGM) in Abhängigkeit der mindestens einen fahrdynamischen Sollgröße unter Verwendung eines invertierten Einspurmodells bestimmt wird.

6. Verfahren nach einem der vorangegangenen Ansprüche, **dadurch gekennzeichnet, dass** die mindestens eine fahrdynamische Sollgröße unter Verwendung eines nicht-invertierten Einspurmodells bestimmt wird.

7. Verfahren nach Anspruch 6, wenn dieser von Anspruch 5 abhängig ist, **dadurch gekennzeichnet, dass** das invertierte und nicht-invertierte Einspurmodell verschieden parametrisiert sind.

8. Verfahren zur Fahrdynamikregelung eines Fahrzeugs, wobei ein resultierendes Giermoment (rGM) zur Fahrdynamikregelung gemäß einem Verfahren nach einem der Ansprüche 1 bis 7 bestimmt wird, wobei in Abhängigkeit des resultierenden Giermoments (rGM) mindestens eine Stellgröße für mindestens eine Stelleinrichtung des Fahrzeugs bestimmt wird.

9. Verfahren nach Anspruch 8, **dadurch gekennzeichnet, dass** in Abhängigkeit des mindestens einen verfügbaren Zusatzgiermoments eine Steuergröße für eine Einrichtung zur Erzeugung eines Zusatzgiermoments bestimmt wird.

10. Vorrichtung zur Bestimmung eines resultierenden Giermoments (rGM) zur Fahrdynamikregelung mit der ein Verfahren gemäß einer der Ansprüche 1 bis 7 durchführbar ist, wobei mittels der Vorrichtung in Abhängigkeit mindestens einer fahrdynamischen Sollgröße mindestens ein Referenz-Giermoment (RGM) bestimmbar ist, wobei mindestens ein verfügbares Zusatzgiermoment bestimmbar ist, welches von einer Einrichtung zur Erzeugung eines Zusatzgiermoments erzeugbar ist, wobei das resultierende Giermoment (rGM) in Abhängigkeit des Referenz-Giermoments (RGM) und des mindestens einen verfügbaren Zusatzgiermoments bestimmbar ist,
**dadurch gekennzeichnet, dass**
das verfügbare Zusatzgiermoment unabhängig vom Referenz-Giermoment erzeugbar ist, wobei das resultierende Giermoment (rGM) als Differenz zwischen dem Referenz-Giermoment (RGM) und dem mindestens einen verfügbaren Zusatzgiermoment bestimmt wird.

11. Vorrichtung nach Anspruch 10, **dadurch gekennzeichnet, dass** mittels der Vorrichtung in Abhängigkeit des resultierenden Giermoments (rGM) mindestens eine Stellgröße für mindestens eine Stelleinrichtung des Fahrzeugs bestimmbar ist und/oder in Abhängigkeit des mindestens einen verfügbaren Zusatzgiermoments eine Steuergröße für eine Einrichtung zur Erzeugung eines Zusatzgiermoments bestimmbar ist.

12. Fahrzeug, umfassend eine Vorrichtung nach einem der Ansprüche 10 oder 11.

## Claims

1. Method for determining a resulting yaw moment (rGM) for driving dynamics regulation of a vehicle, wherein at least one driving dynamics target variable is determined, wherein at least one reference yaw moment (RGM) is determined as a function of the at least one driving dynamics target variable, wherein at least one available additional yaw moment is determined which can be generated by a device for generating an additional yaw moment, wherein the resulting yaw moment (rGM) is determined as a function of the reference yaw moment (RGM) and of the at least one available additional yaw moment,
**characterized in that**
the available additional yaw moment can be generated independently of the reference yaw moment, wherein the resulting yaw moment (rGM) is determined as the difference between the reference yaw moment (RGM) and the at least one available additional yaw moment.

2. Method according to Claim 1, **characterized in that,** in addition, at least one existent additional yaw moment is determined, wherein the resulting yaw moment (rGM) is determined as a function of the existent additional yaw moment.

3. Method according to Claim 2, **characterized in that** the existent additional yaw moment is provided by a device for generating an additional yaw moment.

4. Method according to Claim 3, **characterized in that** the device for generating an additional yaw moment is a device (6) for roll regulation or a device (7) for distributing a drive torque.

5. Method according to any one of the preceding claims, **characterized in that** the reference yaw moment (RGM) is determined as a function of the at least one driving dynamics target variable using an inverted single-track model.

6. Method according to any one of the preceding claims, **characterized in that** the at least one driving dynamics target variable is determined using a non-inverted single-track model.

7. Method according to Claim 6, when this is dependent on Claim 5, **characterized in that** the inverted and non-inverted single-track models are parametrized differently.

8. Method for driving dynamics regulation of a vehicle, wherein a resulting yaw moment (rGM) for driving dynamics regulation is determined according to a method according to any one of Claims 1 to 7, wherein at least one manipulated variable for at least one actuating device of the vehicle is determined as a function of the resulting yaw moment (rGM).

9. Method according to Claim 8, **characterized in that** a control variable for a device for generating an additional yaw moment is determined as a function of the at least one available additional yaw moment.

10. Device for determining a resulting yaw moment (rGM) for driving dynamics regulation with which a method according to any one of Claims 1 to 7 can be carried out, wherein at least one reference yaw moment (RGM) can be determined by means of the device as a function of at least one driving dynamics target variable, wherein at least one available additional yaw moment is determinable which can be generated by a device for generating an additional yaw moment, wherein the resulting yaw moment (rGM) can be determined as a function of the reference yaw moment (RGM) and of the at least one available additional yaw moment,
**characterized in that**
the available additional yaw moment can be generated independently of the reference yaw moment, wherein the resulting yaw moment (rGM) is determined as the difference between the reference yaw moment (RGM) and the at least one available additional yaw moment.

11. Device according to Claim 10, **characterized in that** by means of the device at least one manipulated variable for at least one actuating device of the vehicle can be determined as a function of the resulting yaw moment (rGM) and/or a control variable for a device for generating an additional yaw moment can be determined as a function of the at least one available additional yaw moment.

12. Vehicle, comprising a device according to either of Claims 10 or 11.

## Revendications

1. Procédé de détermination d'un couple d'embardée résultant (rGM) pour la régulation de la dynamique de conduite d'un véhicule, dans lequel au moins une grandeur théorique de dynamique de conduite est déterminée, dans lequel au moins un couple d'embardée de référence (RGM) est déterminé en fonction de la grandeur de consigne de dynamique de conduite, dans lequel au moins un couple d'embardée supplémentaire disponible est déterminé, lequel peut être généré par un dispositif de génération d'un couple d'embardée supplémentaire, dans lequel le couple d'embardée résultant (rGM) est déterminé en fonction du couple d'embardée de référence (RGM) et de l'au moins un couple d'embardée supplémentaire disponible,
**caractérisé en ce que**
le couple d'embardée supplémentaire disponible peut être généré indépendamment du couple d'embardée de référence, le couple d'embardée résultant (rGM) étant déterminé comme la différence entre le couple d'embardée de référence (RGM) et l'au moins un couple d'embardée supplémentaire disponible.

2. Procédé selon la revendication 1, **caractérisé en ce qu'en** plus au moins un couple d'embardée supplémentaire existant est déterminé, le couple d'embardée résultant (rGM) étant déterminé en fonction du couple d'embardée supplémentaire existant.

3. Procédé selon la revendication 2, **caractérisé en ce que** le couple d'embardée supplémentaire existant est fourni par un dispositif de génération d'un couple d'embardée supplémentaire.

4. Procédé selon la revendication 3, **caractérisé en ce que** le dispositif de génération d'un couple d'embardée supplémentaire est un dispositif (6) de régulation antiroulis ou un dispositif (7) de distribution d'un couple moteur.

5. Procédé selon l'une quelconque des revendications précédentes, **caractérisé en ce que** le couple d'embardée de référence (RGM) est déterminé en fonction de l'au moins une grandeur de consigne de dynamique de conduite en utilisant un modèle à une voie inverti.

6. Procédé selon l'une quelconque des revendications précédentes, **caractérisé en ce que** l'au moins une grandeur de consigne de dynamique de conduite est déterminée en utilisant un modèle à une voie non inverti.

7. Procédé selon la revendication 6, lorsque celle-ci dépend de la revendication 5, **caractérisé en ce que** les modèles à une voie inverti et non inverti sont paramétrés de manière différente.

8. Procédé pour la régulation de la dynamique de conduite d'un véhicule, dans lequel le couple d'embardée résultant (rGM) pour la régulation de la dynamique de conduite est déterminé conformément à un procédé selon l'une quelconque des revendications 1 à 7, au moins une grandeur de réglage pour au moins un dispositif de réglage du véhicule étant déterminée en fonction du couple d'embardée résultant (rGM).

9. Procédé selon la revendication 8, **caractérisé en ce qu'une** grandeur de commande pour un dispositif de génération d'un couple d'embardée supplémentaire est déterminée en fonction de l'au moins un couple d'embardée supplémentaire disponible.

10. Dispositif de détermination d'un couple d'embardée résultant (rGM) pour la régulation de la dynamique de conduite, au moyen duquel un procédé selon l'une quelconque des revendications 1 à 7 peut être exécuté, au moins un couple d'embardée de référence (RGM) pouvant être déterminé en fonction d'une grandeur de consigne de dynamique de conduite au moyen du dispositif, au moins un couple d'embardée supplémentaire disponible pouvant être déterminé, lequel peut être généré par un dispositif de génération d'un couple d'embardée supplémentaire, le couple d'embardée résultant (rGM) pouvant être déterminé en fonction du couple d'embardée de référence (RGM) et de l'au moins un couple d'embardée supplémentaire disponible,
**caractérisé en ce que**
le couple d'embardée supplémentaire disponible peut être généré indépendamment du couple d'embardée de référence, le couple d'embardée résultant (rGM) étant déterminé comme la différence entre le couple d'embardée de référence (RGM) et l'au moins un couple d'embardée supplémentaire disponible.

11. Dispositif selon la revendication 10, **caractérisé en ce que,** au moyen du dispositif, au moins une grandeur de réglage pour au moins un dispositif de réglage du véhicule peut être déterminée en fonction du couple d'embardée résultant (rGM) et/ou une grandeur de commande pour un dispositif de génération de couple d'embardée supplémentaire peut être déterminée en fonction de l'au moins un couple d'embardée supplémentaire disponible.

12. Véhicule comprenant un dispositif selon l'une quelconque des revendications 10 ou 11.
